# EUROPÄISCHE PATENTSCHRIFT

(11) **EP 1 078 232 B1**
(45) Veröffentlichungstag und Bekanntmachung des Hinweises auf die Patenterteilung: **06.03.2002**
(21) Anmeldenummer: 99923470.1
(22) Anmeldetag: 23.04.1999
(51) Int. Cl.: G01J 3/04

(54) **STEUERBARE MIKROCODEZEILE, INSBESONDERE FÜR SPEKTROMETER**
CONTROLLABLE MICROCODE LINE, ESPECIALLY FOR SPECTROMETERS
LIGNE DE MICROCODE PILOTABLE, NOTAMMENT POUR SPECTROMETRE

(30) Priorität: 12.05.1998 DE 19821127
(43) Veröffentlichungstag der Anmeldung: 28.02.2001
(73) Patentinhaber: INSTITUT FÜR PHYSIKALISCHE HOCHTECHNOLOGIE E.V., 07745 Jena (DE); Riesenberg, Evelin, 07749 Jena (DE)
(72) Erfinder: RIESENBERG, Evelin, D-07749 Jena (DE); RIESENBERG, Rainer, D-07749 Jena (DE); SEIFERT, Thomas, D-07743 Jena (DE)
(74) Vertreter: Pfeiffer, Rolf-Gerd, Dipl.-Phys.
(86) Internationale Anmeldenummer: EP9902832
(87) Internationale Veröffentlichungsnummer: WO9958938

(56) Entgegenhaltungen:
- US-A- 3 720 469
- US-A- 4 856 897
- US-A- 5 050 989
- US-A- 5 294 971

## Beschreibung

Die Erfindung betrifft eine steuerbare Mikrocodemaske, insbesondere für Spektrometer, oder abbildende Spektrometer oder abbildende digitale Anordnungen. Neben einer Vielzahl bekannter Spaltanordnungen in Spektrometern ist in DE 198 15 079 A1 eine steuerbare Mikrospaltzeile beschrieben, die vorliegender Erfindung am nächsten kommt. Die dort beschriebene Lösung bedient sich zweier gegeneinander verschiebbarer Spaltblenden, die insbesondere eine dem Hadamard-Prinzip folgende Spaltbeleuchtung ermöglicht. Dieser Mikrospaltzeile haftet jedoch der Nachteil an, daß durch die notwendige Unterteilung der Bereiche zwischen n Spalten in (n-1) Teilbereiche mit der Zunahme der Spaltzahl n der Abstand der Spalte zunimmt. Die laterale Ausdehnung der Zeile nimmt mit einer Erhöhung der Spaltzahl dabei erheblich zu. Das erfordert zusätzliche Maßnahmen zur homogenen Ausleuchtung und der Meßbereich wird bei der Abbildung der gesamten Zeile auf ein Diodenarray eingeschränkt. Einerseits steigen die Leistungsmerkmale, insbesondere das Signal/Rausch-Verhältnis eines Spektrometers mit Zunahme der Anzahl n der Spalte, andererseits gerät bei genannter Anordnung die praktikabel nutzbare Zahl n der Spalte an Grenzen infolge der gegebenen optischen Abbildungsverhältnisse.
Außerdem ist aus US-PS 5,294,971 ein Wellenfront-Sensor bekannt, bei dem kreisförmig verteilt, mehrere Masken vorgesehen sind, deren Perforationen dem Hadamardprinzip folgen. Diese Ausführung bedingt jedoch eine sehr voluminöse Bauform und und damit großer nicht sehr präzise einstellbarer Stellwege.
Weiterhin beschreibt US-PS 3,720,469 ein Spektrometer, bei dem vermittels eines Einzelempfängers eine spektrale und räumliche Auflösung eines Bildes vorgenommen werden soll, indem im Strahlengang jeweils zwei feststehende rechteckige Blenden vorgesehen sind, denen jeweils eine in zwei Dimensionen zu verschiebende mit mehreren Perforationen versehene Maske zugeordnet ist Mit einer solchen Ausführung kann jedoch keine Verteilung der Perforationen nach dem Hadamardprinzip bzgl. aller denkbaren Hadamardordnungen, insbesondere nicht bei einer Forderung nach möglichst achssymmetrischer optische Abbildung realisiert werden. Weiterhin ist auch dieser Aufbau, insbesondere durch das Erfordernis jeweils zweier Stellantriebe recht aufwendig.

Der Erfindung liegt die Aufgabe zugrunde, eine Mikrocodemaske anzugeben, die bei kleinsten geometrischen Abmessungen eine maximale laterale Detektorausnutzung in einem Spektrometer gewährleistet und keine zusätzlichen Anforderungen an die weiteren optischen Komponenten im Spektrometer erfordert. Diese Aufgabe wird durch die steuerbare Mikrocodemaske nach Anspruch 1 gelöst.

Die Erfindung besteht darin, daß eine Codemaske mit lichtemittierenden und nichtemittierenden Bereichen in definierter Weise derart versehen ist, daß mit geringfügigen Schaltstellungsänderungen der Codemaske in bezug auf eine fest angeordnete Blende alle Schaltzustände, die durch eine vorgebbare Diagonalmatrix, insbesondere eine Hadamardmatrix, notwendig sind, einstellbar sind.

Die Erfindung soll nachstehend anhand zweier schematischer Ausführungsbeispiele näher erläutert werden. Es zeigen:
- Fig. 1: die Anordnung einer erfindungsgemäßen Mikrocodezeile in einem Spektrometer,
- Fig. 2: eine erste Ausführungsform der Mikrocodezeile als zeilenförmige Mikrospaltzeile,
- Fig. 3: eine zweite Ausführungsform der Mikrocodezeile als flächenförmige ausgebildete Mikrospaltzeile und
- Fig. 4: eine Einsatzvariante einer Ausführungsform nach Fig. 3.

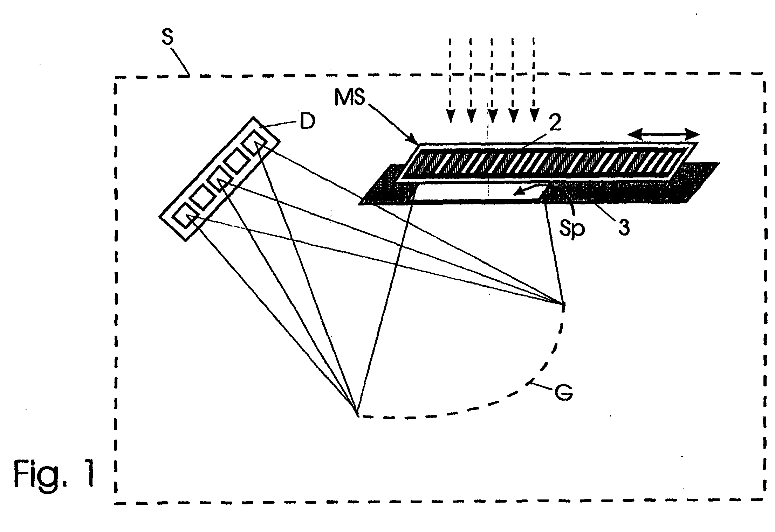

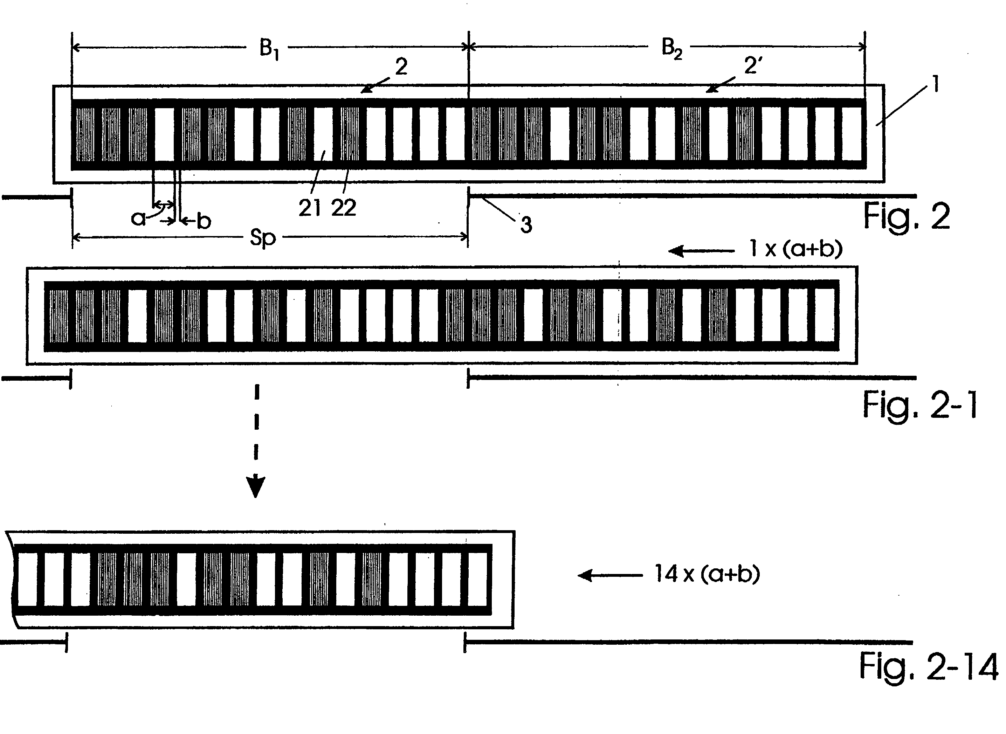

In Figur 1 ist schematisch der Aufbau eines Array-Spektrometers S dargestellt. Dieses enthält zunächst als spektrometertypische Baugruppen ein Detektorarray D mit zeilenförmig angeordneten Einzelempfängerflächen und ein übliches Polychromatorgitter G, das die spektrale Zerlegung der von einer Quelle herrührenden Strahlung, die in Fig. 1 durch strichlinierte Pfeile angedeutet ist, bewirkt. Im Rahmen der Erfindung ist zwischen der Strahlungsquelle bzw. den Strahlungsquellen eine steuerbare Mikrocodezeile MS vorgesehen, die insbesondere als Mikrospaltzeile 2 ausgebildet ist, und deren Spaltfestlegung dem Hadamard-Prinzip folgt. Diese Mikrospaltzeile 2 ist gegenüber einer ihr in Abbildungsrichtung vorgelagerten Blende 3, die mit einem Spalt Sp definierter Spaltbreite versehen ist in definierten Schritten verschiebbar, wie es in Fig. 1 durch einen Doppelpfeil angedeutet ist. Für die Verschiebung der Mikrospaltzeile kommen übliche Präzisionsstellantriebe, insbesondere piezoelektrische Antriebe in Betracht.
Eine erste Ausbildungsmöglichkeit der Mikrospaltzeile soll anhand von Figur 2 näher erläutert werden. In ein in Fig. 2 nicht maßstäblich dargestelltes Si-Substrat 1 der Größe 20 mm · 20 mm, welches mit einer 1, 5 µm dicken Si₃N₄-Schicht versehen ist, wird durch einen üblichen Tiefenätzprozeß eine Ausnehmung mit dem Maßen 3 mm · 5 mm geätzt, so daß die Si₃N₄-Schicht als Membran auf dem Si-Substrat verbleibt. Zusätzlich wird diese Membran mit einer bzgl. der zu analysierenden Strahlung undurchlässigen Belegung versehen. In diese Membran sind entsprechend einer Diagonalmatrix, insbesondere nach dem Hadamard-Prinzip verteilte Spalte eingebracht. Im Beispiel wird von zunächst von einer Zeile mit n = 15 Bereichen ausgegangen, die über den Bereich B₁ äquidistant verteilt sind. Die Breite der Bereiche ist bestimmt durch die gewünschte Spaltbreite, welche nach den Erfordernissen des speziellen Spektrometers vorgebbar ist. Geht man von einem Abstand der Empfängerelemente der Detektorzeile D von 25 µm aus, ergibt sich der Mittenabstand der Spalte 21 in der Zeile, unter Voraussetzung eines Abbildungsmaßstabes im Spektrometer von 1:1, grundsätzlich auch zu 25 µm. Um eine Auflösungserhöhung des Spektrometers zu erzielen, die nicht ursächlich Gegenstand dieser Erfindung ist, wird zwischen den Bereichen der Breite a, hier 25 µm, ein weiterer Bereich der Breite b, der als Steg präpariert sein kann, vorgesehen. Im Beispiel ergibt sich eine Breite von ca. b= 1,7 µm, die entsteht durch den Quotienten aus der Spaltbreite und der Anzahl der im Bereich B₁ vorgesehenen Elemente, also 25 µm/15 ≈ 1,7 µm. Der Mittenabstand der einzelnen Bereiche, die als geöffneter Spalt 21 oder uneröffneter Membranbereich 22 in Fig. 2 dargestellt sind, beträgt im Beispiel somit 26,7 µm. Im Beispiel ist den 25 µm breiten Spalten 21 eine Längsausdehnung von 2,5 mm gegeben. Dem so mit fünfzehn Bereichen versehenen ersten Bereich B₁ der Mikrospaltzeile 2 ist ein dazu identisch ausgebildeter Bereich B₂ einer Mikrospaltzeile 2' unmittelbar nachgeordnet. Die Verteilung von geöffneten Spalten 21 und uneröffneten Membranbereichen 22 über die Bereiche B₁ und B₂ ist dabei nach dem Hadamardprinzip der sogenannten S-Matrix festgelegt, wodurch sich für die erste Zeile der S-Matrix bei den hier vorgesehenen fünfzehn Elementen der Code 000100110101111 ergibt. Die 0 steht dabei für einen uneröffneten Membranbereich und die 1 für einen Spalt. Die Wiedergabe des genannten Codes der ersten Zeile ist in Fig. 2 von links beginnend ersichtlich, so folgen drei uneröffneten Membranbereichen ein Spalt, also 0001, zwei uneröffnete Membranbereiche, zwei Spalte (0011) usw. bis alle fünfzehn Elemente abgedeckt sind, worauf sich der Code im Bereich B₂ identisch wiederholend anschließt, so daß insgesamt dreißig Bereiche zur Verfügung stehen. Der so gebildeten Mikrospaltzeile ist eine feststehende Blende 3 vorgelagert, die einen Spalt Sp aufweist, der in seiner Breite so festgelegt ist, daß jeweils genau fünfzehn Elemente, von denen im Beispiel jeweils acht als Spalt 21 ausgebildet sind, zur Abbildung im Spektrometer zur Verfügung stehen. Ausgehend von der in Fig. 2 dargestellten ersten Meßposition wird die Mikrospaltzeile durch ein nicht dargestelltes lineares Verstellmittel um einen Betrag von genau 1 · (a + b), hier also um 26,7 µm verschoben, wie es in Fig. 2-1 durch einen nach links weisenden Pfeil angedeutet ist. Vom Spalt Sp der Blende 3 ist somit die zweite Zeile der Hadamard S-Matrix (001001101011110) erfaßt. Diese äquidistante Verschiebung wird, ausgehend von Fig. 2, 14mal durchgeführt, so daß man in die Endstellung der Mikrospaltzeile gelangt, wie sie in Fig. 2-14 dargestellt ist, und somit fünfzehn Meßpositionen erhält, wodurch ein gebildetes Gleichungssystem mit fünfzehn Unbekannten auf übliche Weise lösbar ist. Der Vorteil der Anordnung nach Fig. 2 besteht darin, daß durch eine Mikrospaltzeile relativ geringer Breite, von der hier durch den Spalt Sp jeweils etwa 400 µm erfaßt sind, ein relativ hoher Intensitätsanteil der zu detektierenden Strahlung, durch die jeweils acht zur Abbildung gelangenden Spalte 21, auf die Detektorzeile D gelangt, wodurch das Signal/Rausch-Verhältnis günstig beeinflußt wird. Eine weitere Erhöhung der Elementenzahl auf der Mikrospaltzeile würde dieses Signal/Rausch-Verhältnis weitergehend verbessern, jedoch erhöht sich dadurch auch die Breite B₁ und B₂ der Mikrospaltzeile und die erforderliche Breite des Spalts Sp der Blende 3, wodurch man an die Abbildungsgrenzen im Spektrometer stößt.

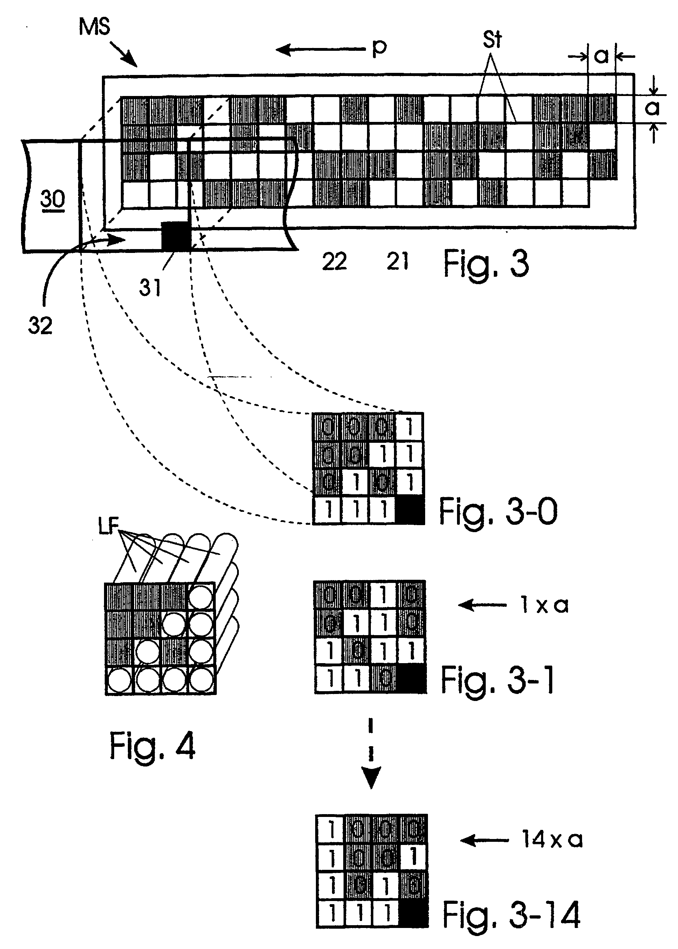

Im Rahmen der Erfindung kann dennoch eine weitere förderliche Erhöhung der Elementenzahl erreicht werden, ohne an die Abbildungsgrenzen im Spektrometer zu gelangen, indem die zur Abbildung gelangenden Codes der Hadamard S-Matrix eine flächenhafte Aufteilung erfahren. Eine derartige Mikrospaltausbildung ist in einem zweiten Ausführungsbeispiel in den Figuren 3 dargestellt. Ebenso wie im ersten Ausführungsbeispiel wird auf einem Substrat eine Membran präpariert. Im Beispiel wird diese Membran nunmehr bevorzugt in quadratische Bereiche der Ausdehnung (a·a) von je 25µm · 25µm unterteilt. Diese Flächenbereiche können für die Öffnung eines Mikrospalts vorgesehen sein, der im Beispiel eine Ausdehnung von 23 µm·23 µm annehmen kann, wobei die Breite der verbleibenden Stege St von 2 µm ausreicht, um die nicht geöffneten Membranflächen, welche in Fig. 3 senkrecht schraffiert dargestellt sind, zu tragen. Zur Erleichterung der Übersicht und zum deutlicheren Vergleich zum ersten Ausführungsbeispiel, jedoch ohne Begrenzung der Erfindung auf die dargestellte Elementenzahl wird im Beispiel der Aufbau einer Matrix mit (4·4) Elementen beschrieben, die mit dem im ersten Ausführungsbeispiel verwendeten zeilenweisen durchgeschobenen Code, beginnend mit (000100110101111) belegt sind. In der Ausgangsstellung der so gebildeten Mikrospaltzeile 2 ist genannter Code in der Weise der Mikrospaltzeile aufgeprägt, wie in Fig. 3-0 dargestellt, zunächst eine obere Spaltzeile vorgesehen ist, die drei uneröffnete Membranbereiche aufweist, an die sich ein geöffneter Spalt anschließt (0001); in der darunterliegenden Zeile wird genannter Code fortgesetzt durch zwei uneröffnete Membranbereiche, an die sich zwei geöffnete Spalte anschließen (0011); die folgende Zeile gibt den Code (0101) und die unterste Zeile den Code (111) wieder. Da bei dem hier gewählten Code mit fünfzehn Elementen und der gewählten (4 · 4)-Matrix der sechzehnte Feldplatz nichts zur Signalermittlung beiträgt, wird dafür Sorge getragen, daß dieser Feldplatz stets ausgeblendet ist. Die im Beispiel vorgesehene Blende 30 weist analog zum ersten Ausführungsbeispiel eine Öffnung 32 auf, die die Erfassung der (4·4) Elemente der Mikrospaltzeile gewährleistet, wobei in diesem Fall ein teilweiser Blendenteilverschluß 31 vorgesehen ist, der der Ausblendung des sechzehnten Elements dient. Im übrigen ist die durch Öffnung 32 umfaßte Fläche von einem nichttransparenten Rahmen der Blende 30 gebildet, der zur Verdeutlichung der vorliegenden Verhältnisse in Fig. 3 jedoch nur teilweise angedeutet und transparent dargestellt ist. Die durch die Öffnung 32 erfaßte Fläche der Mikrospaltzeile ist durch fluchtende strichlinierte Linien angedeutet. Diese zur Abbildung gelangende Fläche hat im Beispiel eine Ausdehnung von 100 µm · 100 µm und weist wiederum jeweils acht geöffnete Mikrospalte auf, wie es in Fig. 3-0 ersichtlich ist. Ausgehend von dieser Ausgangsstellung der Mikrospaltblende erfolgt wiederum analog zum ersten Ausführungsbeispiel eine Verschiebung der Mikrospaltblende gegenüber der feststehenden Blende 30 um jeweils eine Elementeinheit der Mikrospaltblende, im Beispiel also um 25 µm, in Richtung eines Pfeils p. Die bei der ersten und nach der vierzehnten Verschiebung erhaltenen Teilbilder der Mikrospaltblende sind in den Figuren 3-1 respektive 3-14 dargestellt. Jedes der dabei erhaltenen fünfzehn Spaltbilder wird nacheinander analog zu Fig. 1 über das Gitter G auf die Detektorzeile D abgebildet und genannter Auswertung zugeführt. Die Verschiebung o.g. Codes der Hadamard S-Matrix um jeweils eine Position ist auch bei diesem Ausführungsbeispiel identisch zum ersten.
Geht man von einer anderen Hadamard Matrix als der hier beschriebenen aus, kann es vorteilhaft sein, im Rahmen des zweiten Ausführungsbeispiels den Code einer Hadamard Matrixzeile und damit die geöffneten und geschlossenen Mikrospaltblendenbereiche auf eine Fläche zu verteilen, die von einer gleichzahligen Begrenzung der durch die Öffnung 32 der Blende erfaßten Elementbereiche der Mikrospaltzeile abweicht. So könnte die Blendenöffnung, für eine andere Hadamard S-Matrix, auch so ausgebildet sein, daß bspw. (3·4) oder andere Begrenzungen erfaßbar sind, wenn dadurch eine günstigere Verteilung des entsprechenden Codes auf der Mikrospaltzeile gegeben ist und die Anbringung weiterer als nur des einen Blendenverschlusses 31 vermieden werden soll. In jedem Fall soll jedoch eine weitestgehende Annäherung an eine gleichzahlige Elementbegrenzung der durch die Öffnung 32 erfaßten Fläche gegeben sein, da dadurch ein Code auf die kleinstmögliche Fläche übertragbar ist, welche bestmöglich den Abbildungsgegebenheiten im Spektrometer angepaßt ist.
Darüber hinaus ermöglicht eine Ausführung nach Fig. 3 die Ankopplung mehrerer Lichtkanäle, bspw. vermittels Lichtleitfasern LF, wie in Fig. 4 schematisch angedeutet, die mit unterschiedlichen spektralen Quellen in Verbindung stehen, ohne daß die Linearausdehnung der Mikrospaltzeile für die anschließende Signalverarbeitung zu weit ausgedehnt werden muß. Als Schaltstellung der Mikrospaltblende wurde in Fig.4 die Ausgangsstellung entsprechend Fig. 3-0 gewählt. Auf diese Weise ist man in die Lage versetzt, quasi simultan unterschiedliche Spektren aufzunehmen und zu trennen, was bspw. für ein Mehrkanalspektrometer hoher Kanalzahlen vorteilhaft genutzt werden kann.

Weiterhin eröffnet eine nach Fig. 3 ausgebildete Mikrospaltzeile die Möglichkeit, zweidimensionale Bilder durch einen preiswerten, nur eindimensionalen Zeilendetektor D zu verarbeiten.

Es liegt weiterhin im Rahmen der Erfindung, eine nach obigen Maßgaben in Einzelbereiche unterteilte Membran statt mit Spalten zu versehen, anstelle der Spalte mikrostrukturierte spiegelnde Metallschichten vorzusehen, wobei die Verteilung dieser spiegelnden Bereiche identisch zur Festlegung der Spalte nach den Figuren 2 oder 3 erfolgt. Eine so gebildete Mikrospiegelzeile würde in Abweichung zum prinzipiellen Aufbau nach Fig. 1 dann lediglich mit der zu analysierenden Strahlung zu beleuchten, also in Reflexion, bei sonst identischen Verhältnissen zu betreiben sein.

### Bezugszeichenliste

- 1 -: Substrat
- 2,2' -: Mikrospaltzeile
- 21 -: geöffnete Spalte
- 22 -: uneröffnete Membranbereiche
- 3, 30 -: feststehende Blende
- 31 -: Blendenteilverschluß
- 32 -: Öffnung der Blende 30
- a -: Spaltbreite
- b -: Spaltabstand
- B₁ -: erster Bereich der Mikrospaltzeile
- B₂ -: zweiter Bereich der Mikrospaltzeile
- D -: Detektorzeile
- G -: Polychromatorgitter
- LF -: Lichtleitfaser
- MS -: Mikrocodezeile
- S -: Array-Spektrometer
- Sp -: Spalt
- St -: Steg

## Patentansprüche

1. Steuerbare Mikrocodemaske insbesondere für Spektrometer; mit einer feststehenden Blende und einer gegenüber dieser verschiebbaren Codemaske, die optisch transparente und nicht transparente Bereiche, die nach dem Hadamardprinzip verteilt angeordnet sind, umfaßt, **dadurch gekennzeichnet, daß** die Codemaske in einem ersten Bereich (B₁) in n identische Teilbereiche unterteilt ist, deren Anzahl in Abhängigkeit von der Elementenanzahl einer Zeile einer vorgebbaren Hadamardmatrix festgelegt ist, wobei den Teilbereichen in bezug auf die in der Anordnung zum Einsatz gelangende Strahlung eine transparente oder reflektierende und eine nichttransparente oder absorbierende optische Wirkung entsprechend der Codefolge in der ersten Zeile der vorgegebenen Hadamardmatrix verliehen ist und sich an diesen ersten Bereich (B₁) unmittelbar anschließend zumindest ein zweiter Bereich (B₂) vorgesehen ist, der eine zum ersten Bereich identische Anzahl n von Teilbereichen enthält, denen eine analoge optische Wirkung zu den Teilbereichen des ersten Bereichs (B₁), bezogen auf die Anzahl transparenter oder reflektierender Teilbereiche, verliehen ist und diesen Bereichen (B₁, B₂) vorgelagert die feststehende Blende (3, 30) zugeordnet ist, die eine Öffnung (Sp, 32) aufweist, welche in ihrer Ausdehnung so bemessen ist, daß ausschließlich die Anzahl der n festgelegten Teilbereiche erfaßt sind, die der Länge einer Zeile der vorgegebenen Hadamardmatrix entspricht und diese Codemaske in (n-1) diskreten Schritten lateral gegenüber der feststehenden Blende (3, 30) so verschiebbar ist, daß jeweils ausschließlich eine vollständige Anzahl von n Teilbereichen einer Zeile der Hadamardmatrix durch die Öffnung (Sp, 32) erfaßt sind.

2. Steuerbare Mikrocodemaske, nach Anspruch 1 **dadurch gekennzeichnet, daß** die Codemaske durch eine Dünnschichtmembran gebildet ist, die mit einer nichttransparenten Belegung und in einem ersten Bereich (B₁) entsprechend der n Elemente der ersten Zeile der Hadamardmatrix mit geöffneten Spalten (21) und uneröffneten Membranbereichen (22), deren Summe identisch n ist, in linearer Anordnung versehen ist, an den sich unmittelbar anschließend ein zum ersten Bereich (B₁) identisch ausgebildeter zweiter Bereich (B₂) anschließt, wobei der Codemaske eine Blende (3) vorgelagert ist, die einen Spalt (Sp) aufweist der die vorgegebene Anzahl n der Spalten (21) und uneröffneten Membranbereiche (22) erfaßt.

3. Steuerbare Mikrocodemaske nach Anspruch 2, **dadurch gekennzeichnet, daß** die n vorgesehenen Teilbereiche, bestehend aus Spalten (21) und uneröffneten Membranbereichen (22) jeweils um einen Betrag b voneinander beabstandet sind, wobei sich b ergibt aus einer Beziehung a/n = b, wobei a für die vorgebbare Breite eines Spalts (21) steht.

4. Steuerbare Mikrocodemaske nach Anspruch 1, 2 und 3, **dadurch gekennzeichnet, daß** die Codemaske, beginnend von einer vorgegebenen Ausgangsstellung, in (n - 1) diskreten Schritten der Schrittweite (n - 1) · (a + b) gegenüber dem Spalt (Sp) der Blende (3) verschiebbar ist.

5. Steuerbare Mikrocodemaske nach Anspruch 1, **dadurch gekennzeichnet, daß** die Codemaske durch eine Membran gebildet ist, die mit einer nichttransparenten Belegung und in einem ersten Bereich entsprechend der n Elemente der ersten Zeile der Hadamardmatrix zeilenweise dem Code der ersten Zeile der Hadamardmatrix aufeinanderfolgend mit geöffneten Spalten und uneröffneten Membranbereichen, deren Summe identisch n ist, versehen ist, wobei alle n Teilbereiche zu einer ersten rechteckigen Fläche möglichst niedrigst realisierbaren Umfangs zusammengefaßt sind, und entsprechend dieser vorgegebenen Fläche und entsprechend der Codes der weiteren (n - 1) Zeilen der Hadamardmatrix geöffnete Spalte und uneröffnete Membranbereicbe der zeilenmäßigen Codeaufteilung der ersten Fläche folgend unmittelbar an das letzte Element der ersten Fläche anschließend hintereinander vorgesehen sind, wobei der Codezeile eine Blende (30) vorgelagert ist, die eine Öffnung (32) aufweist, deren äußere Berandung der der ersten Fläche entspricht.

6. Steuerbare Mikrocodemaske nach Anspruch 1 und 5, **dadurch gekennzeichnet, daß** die Öffnung (32) der Blende (30) zusätzlich mit mindestens einem Blendenteilverschluß (31) versehen ist, der der Ausdehnung eines Teilbereichs eines geöffneten Spalts oder uneröffneten Membranbereichs entspricht.

7. Steuerbare Mikrocodemaske nach Anspruch 6, **dadurch gekennzeichnet, daß** der Blendenteilverschluß (31) innerhalb der Öffnung (32) an einer solchen Stelle angeordnet ist, an der in Ausgangsstellung der Codemaske die Flächenbelegung mit geöffneten Spalten und uneröffneten Membranbereichen gemäß der Verteilung der ersten Hadamardmatrixzeile endet.

8. Steuerbare Mikrocodemaske nach einem der vorstehenden Ansprüche, **dadurch gekennzeichnet, daß** genannte Spalte (21) durch reflektierende Flächen ersetzt sind.

9. Steuerbare Mikrocodemaske nach Anspruch 2 oder 5, **dadurch gekennzeichnet, daß** den jeweiligen Teilbereichen der Codemaske, die von der Öffnung (32) erfaßt sind, jeweils gesonderte Lichtkanäle (LF) zugeordnet sind, die mit unterschiedlichen Strahlungsquellen verbindbar sind.

## Claims

1. Controllable microcode mask, in particular for spectrometers, comprising a stationary diaphragm and a code mask displaceable relative to said stationary diaphragm, including optically transparent and non-transparent ranges which are arranged and distributed according to the Hadamard principle, **characterized in that** the code mask is divided in a first range (B₁) into n identical partial ranges, the number of which is determined in dependence on the number of elements in a line of a preselectable Hadamard matrix, wherein the partial ranges, with respect to the radiation used in the arrangement, are given a transparent or reflective and a non-transparent or absorbing optical effect according to the code sequence in the first line of the preselected Hadamard matrix, and **in that** at least a second range (B₂) is provided directly following said first range (B₁), said second range comprising a number n of partial ranges, said number being identical to that of the first range, which partial ranges having an optical effect in analogy to that of the partial ranges of said first range (B₁) related to the number of transparent or reflective partial ranges, and **in that** a stationary diaphragm (3, 30) is provided being associated and pre-positioned to the ranges (B₁, B₂), said diaphragm (3, 30) having an opening (Sp, 32) which, in its extensions, is so dimensioned that only the number of n predetermined partial ranges is captured that corresponds to the length of a line of the preselected Hadamard matrix, and this code mask is adapted to be laterally displaced in (n-1) discrete steps relative to the stationary diaphragm (3, 30) in such a way that exclusively and in each case a complete number of n partial ranges of a line of the Hadamard matrix is captured through the opening (Sp, 32).

2. Controllable microcode mask as claimed in claim 1, **characterized in that** the code mask is formed by a thin layer membrane which, in a linear arrangement, is provided with a non-transparent coverage and, in a first range (B₁), corresponding to the n elements of the first line of the Hadamard matrix, with open slits (21) and non-open membrane areas (22), the sum of which is identical to n, said first range (B₁) being directly followed by a second range (B₂) which is identically formed to the first range (B₁), whereby the code mask is pre-positioned by a diaphragm (3) that has a slit (Sp) which captures the predetermined number n of slits (21) and the non-open membrane areas (22).

3. Controllable microcode mask as claimed in claim 2, **characterized in that** the provided n partial ranges comprising the slits (21) and the non-open membrane areas (22) are spaced from each other by an amount b each, wherein b is the result of a/n = b, with a as the preselectable width of a slit (21).

4. Controllable microcode mask as claimed in claims 1, 2, and 3, **characterized in that**, starting from a preselectable initial position, the code mask is displaceable relative to the slit (Sp) of the diaphragm (3) in (n-1) discrete steps of a step width (n-1) · (a + b).

5. Controllable microcode mask as claimed in claim 1, **characterized in that** the code mask is formed by a membrane which is provided with a non-transparent coverage and which is provided, in a first range, and in accordance to the n elements of the first line of the Hadamard matrix and in a line-wise following-up of the code of the first line of the Hadamard matrix, with a sequence of open slits and non-open membrane areas, the sum of which being identical to n, whereby all n partial ranges are comprised to a first rectangular area of the lowest realizable circumference possible and whereby, in accordance to that predetermined area and to the codes of the further (n-1) lines of the Hadamard matrix, open slits and the non-open membrane areas are provided directly subsequent to the last element of the first area following the line-wise code partition of the first area, whereby the code line is pre-positioned by a diaphragm (30), which has an opening (32), the external frame of which corresponds to that of the first area.

6. Controllable microcode mask as claimed in claims 1 and 5, **characterized in that** the opening (32) of the diaphragm (30) is additionally provided with at least one partial diaphragm stop (31) which corresponds to the extensions of a partial area of an open slit or a non-open membrane area.

7. Controllable microcode mask as claimed in claim 6, **characterized in that** the partial diaphragm stop (31) is, within the opening (32) arranged at such a position at which, in the starting position of the code mask, the area coverage with open slits and non-open membrane areas according to the distribution of the first Hadamard matrix line is at an end.

8. Controllable microcode mask as claimed in one of the preceding claims, **characterized in that** said slit (21) is substituted by reflective faces.

9. Controllable microcode mask as claimed in claim 2 or 5, **characterized in that** respective discrete light channels (LF) are associated to the respective partial areas of the microcode mask that are captured by the opening (32), whereby said light channels (LF) are adapted to be connected to different radiation sources.

## Revendications

1. Le masque à microcode pilotable utilisé de préférence pour le spectromètre, doté d'un diaphragme fixe et d'un masque codé mobile couvrant les zones optiquement transparentes et non transparentes réparties suivant le théorème de Hadamard, est **caractérisé en ce que** le masque codé comprend plusieurs segments dont le premier segment (B₁) est subdivisé en plusieurs segments partiels identiques dont le nombre est fonction d'une matrice de Hadamard prédéfinie, les segments partiels étant, en ce qui concerne l'effet optique, soit transparents ou réflecteurs, soit non transparents ou non absorbant des rayonnements appliqués, conformément au code de la première ligne de la matrice de Hadamard prédéfinie, que le premier segment (B₁) est immédiatement suivi d'au moins un deuxième segment (B₂) qui, par rapport au premier segment, comprend n segments partiels dont les effets optiques sont identiques à ceux des segments partiels du premier segment (B₁) en ce qui concerne le nombre de segments partiels transparents ou réflecteurs, que le diaphragme (3, 30) fixe situé en amont de ces segments (B₁, B₂), présente une ouverture (Sp, 32) dont l'extension est dimensionnées de sorte que seul le nombre des n segments partiels prédéfinis est saisi qui correspond à la longueur d'une linge de la matrice de Hadamard, que le masque codé peut être déplacé en (n-1) pas discrets dans le sens latéral par rapport au diaphragme fixe (3, 30) de manière que, exclusivement, le nombre complet de n segments partiels d'une ligne de la matrice de Hadamard sera saisi par l'ouverture (Sp, 32).

2. Le masque à microcode pilotable suivant la revendication 1 est **caractérisé en ce que** le masque codé est formé par une membrane, en forme d'une couche mince, comprenant, en disposition linéaire, une partie non transparente et, dans un premier segment (B₁), des fentes ouvertes (21) conformément aux n éléments de la première ligne de la matrice de Hadamard, et des zones de membrane non ouvertes (22) dont la somme est identique à n, suivies immédiatement du deuxième segment (B₂) étant identique au premier segment (B₁), et **en ce qu'**en. amont du masque codé, est disposé un diaphragme (3) doté d'une fente (Sp) saisissant le nombre n des fentes (21) et des zones non ouvertes (22) de la membrane.

3. Le masque à microcode pilotable suivant la revendication 2 est **caractérisé en ce que** les n segments partiels, comprenant les fentes (21) et les zones non ouvertes (22) de la membrane, sont disposés les unes des autres, dans une distance b, b étant le résultat de a/n = b et a étant la largeur prédéfinie d'une fente (21).

4. Le masque à microcode pilotable suivant les revendications 1, 2 et 3 est **caractérisé en ce que** le masque codé peut être déplacé de sa position initiale par rapport à la fente (Sp) du diaphragme (3) en effectuant (n-1) pas discrets aux dimensions de (n-1) x (a+b).

5. Le masque à microcode pilotable suivant la revendication 1 est **caractérisé en ce que** le masque codé est formé par une membrane comprenant une partie non transparente et, dans un premier segment, des fentes ouvertes conformément aux n éléments de la première ligne de la matrice de Hadamard, et des zones de membrane non ouvertes dont la somme est identique à n, toutes les n segments partiels formant une première surface rectangulaire présentant une circonférence réalisable dans les dimensions aussi petites que possible, et comprenant des fentes ouvertes en fonction de la surface prédéfinie et des codes des autres (n-1) lignes de la matrice de Hadamard ainsi que des parties non ouvertes de la membrane en conformité aux lignes du code de la première surface, qui suivent immédiatement au dernier élément de la première surface, et **en ce qu'**un diaphragme (30) est situé en amont de la ligne codé, présentant une ouverture (32) dont la circonférence correspond à celle de la première surface.

6. Le masque à microcode pilotable suivant les revendications 1 et 5 est **caractérisé en ce que** l'ouverture (32) du diaphragme (30) est doté en plus d'au moins d'un obturateur de diaphragme partiel (31) dans l'ouverture correspondant aux dimensions d'un segment partiel d'une fente ouverte ou d'une partie non ouverte de la membrane.

7. Le masque à microcode pilotable suivant la revendication 1 est **caractérisé en ce que** l'obturateur de diaphragme (31) dans l'ouverture (32) est disposé à un endroit où, le masque codé, étant en position initiale, finit l'occupation de la surface par des fentes ouvertes et des zones non ouvertes de la membrane, réalisées conformément à la répartition données par la première ligne de la matrice de Hadamard.

8. Le masque à microcode pilotable suivant une des revendications précédentes est **caractérisé en ce que** les fentes indiquées (21) sont remplacées par des surfaces réflectrices.

9. Le masque à microcode pilotable suivant les revendications 2 ou 5 est **caractérisé en ce qu'**aux différentes segments partiels du masque codé, saisis par l'ouverture (32), correspondent des fibres optiques assurant le passage de la lumière, que l'on peut relier à différentes sources de rayonnement.
